# EUROPEAN PATENT SPECIFICATION

(11) **EP 0 312 078 B1**
(45) Date of publication and mention of the grant of the patent: **03.02.1993**
(21) Application number: 88117096.3
(22) Date of filing: 14.10.1988
(51) Int. Cl.: B01J 7/02, B65D 83/14, B67D 1/04

(54) **Apparatus for chemically generating and dispersing gas**
Apparatur zum chemischen Erzengung und Entnahme von Gasen
Générateur de gaz engendrés par voie Chimique

(30) Priority: 15.10.1987 US 108921
(43) Date of publication of application: 19.04.1989
(73) Proprietor: THE COCA-COLA COMPANY, Atlanta, Georgia 30313 (US)
(72) Inventor: Plester, George, D-4300 Essen 18 (DE)
(74) Representative: Abitz, Walter, Dr.-Ing.

(56) References cited:
- DE-A- 3 320 197
- FR-A- 2 165 955
- US-A- 3 453 086
- US-A- 3 554 707

## Description

The invention relates to an apparatus for chemically generating gas and supplying the gas to a utilization device at a predetermined pressure. Conventional CO₂ gas cylinders are heavy, relatively expensive and available only as returnable, refillable packages. Since such cylinders are under very high pressure, handling requires appropriate care.

With the trend toward mini-sized and home-dispensers for soft-drinks, where the syrup-packaging is generally one-way, it is logistically attractive to make one-way CO₂-packaging also available. Moreover, certain conventional distribution channels, such as super-market stores, could only be effectively exploited if one-way packaging were available. An additional factor is that lay dispenser-users are understandably nervous of handling high-pressure gas cylinders. High-pressure CO₂-capsules, generally containing about 8 g CO₂, are already available, but these are expensive and restricted in practical capacity to a limit of around 16 - 20 g. They do not, therefore, represent a solution, since such quantities are barely sufficient for carbonating 2 liters of beverage without reckoning the considerable additional CO₂ quantities needed for propulsion of the beverage in the dispenser.

Inexpensive, light-weight, unpressurized or moderately pressurized CO₂-packaging can therefore provide a whole scope of new business opportunities with respect to small-sized dispensers designed for non-professional users.

Ullmanns Enzyklopädie der Technischen Chemie, 4th Edition 1974, volume 7, pages 65/66 discloses an apparatus for chemically generating gas and supplying the gas at a predetermined pressure. That apparatus comprises a supply means which feeds a solid reagent into the gas generation chamber in response to a pressure drop in the gas generation chamber and requires a continous water supply to said chamber.

US-A-3,554,707 discloses a gas generator wherein the solid reagent is located in a cage in the middle of the apparatus and the liquid is in a compartment which is entirely composed of bellows so that these can be squeezed by natural resilience of the bellows to bring the liquid into contact with the solid reagent until sufficient pressure is generated to separate the reagents.

The problem underlying the invention is to provide a compact gas generator which is portable and easily deliverable.

The solution of that problem is set forth in claim 1 and preferred embodiments of the invention are set forth in the subclaims.

The gas generator of the present invention provides gas at or near user pressure. It can be combined with an outside reference pressure source to generate gas automatically by mixing the necessary reagents to the degree required to maintain the reference pressure. It can maintain a predetermined pressure in the head-space of a beverage bottle during use and can maintain a predetermined pressure in a liquid container and also propell the liquid through a simple dispensing head.

It is still a further object of the present invention to provide a dispensing head for a container of a simple disposable construction.

The gas generator can be of a capsule construction suitable for use in an aerosol container for maintaining head space pressure.

The second reagent can be a substance, such as sodium bicarbonate, which in contact with a liquid acid, such as phosphoric acid, generates CO₂. Alternatively, a powdered mixture of bicarbonate and a solid acid, such as citric acid, may be employed and then only water is needed to release the CO₂ gas. The chemicals used can be types normally found in beverages, so that their use in a beverage dispensing system, or other food application, need not arouse concern. Since the chemicals only generate a gas pressure when they are mixed in the aqueous state, their packaging can be relatively simple.

Chemical generation of CO₂ gas is well-known but has so far had limited application, since a convenient, simple method enabling Co₂-gas generation at a controlled user pressure of the order, say, of 100 to 800 kPa (1 - 8 Bar) has not been available. According to the present invention, devices are provided which package the chemicals within a system, which releases CO₂ at a predetermined pressure. It allows the chemicals to be consumed only as and when CO₂-gas is drawn off, whereby the chemicals react just sufficiently to maintain the required user pressure. The net result is that the chemical mixture can either be supplied as a liquid system or as a liquid-solid system or finally as a solid system, depending on application. It can be contained in relatively simple plastic packaging, capable of withstanding only moderate pressures, or depending on the system employed by the user, even in non-pressurized dry solid form. This involves relatively inexpensive packaging and the system as a whole can provide the user with simplicity and convenience.

Furthermore, a convenient CO₂ gas-generation package has uses in many household applications associated with beverages and other products, aside from direct use in beverage dispensers. Examples of these are:

Capsules inserted in large carbonated beverage bottles, which release CO₂ once the closure is applied, and thus maintain a CO₂ pressure in the head-space of the package until the product is consumed. In this way, the freshness of the beverage can be maintained throughout the period of consumption, providing improved quality with larger packages. Such a device would be pencil-like in shape, inserted within the bottle during the bottling process prior to capping and additionally ensure a high shelf-life without requiring exceptional barrier properties in the package itself.

Inclusion of gas-generator in simple dispensing heads, thus maintaining a head-space pressure in extra-large beverage bottles and bottles of other products, so that the user may dispense the liquid by simply pressing the dispensing head. This will improve the convenience of large liquid packages. In the case of carbonated beverages, it will enable the sale of ready-for-use "premix" dispensers comprising of a large bottle, a simple dispensing head and a CO₂-gas generator.

Inclusion of gas-generator in devices requiring a propellant gas, such as aerosols. Here the availability of a controlled, low-pressure source of CO₂ within the aerosol will resolve a continuing industry problem. Current propellants for aerosols are liquids with of boiling points, which additionally must be non-inflammable and have harmless vapours. While presently used halogenated hydrocarbons are variously suspect on health, environmental, and other grounds, CO₂ is both non-inflammable and completely harmless both to the environment and to humans.

It is proposed to describe herein the principles of the CO₂-gas generator of the present invention in some of its various possible forms and also to describe its embodiment with reference to the various applications described above.

A laboratory gas-generator, generally referred to as "Kipps Apparatus" is well-known, but this produces gas at pressures barely above atmospheric and cannot be transported. Other systems currently available using acid/bicarbonate chemicals involve the user in inconvenient manipulation. The system of the present invention can provide medium pressure gas, in transportable and convenient form.

Further scope of applicability of the present invention will become apparent from the detailed description given hereinafter. However, it should be understood that the detailed description and specific examples, while indicating preferred embodiments of the invention, are given by way of illustration only, since various changes and modifications within the spirit and scope of the invention will become apparent to those skilled in the art from this detailed description.

### BRIEF DESCRIPTION OF THE DRAWINGS

The present invention will become more fully understood from the detailed description given hereinbelow and the accompanying drawings which are given by way of illustration only, and thus are not limitative of the present invention, and wherein:
Figures 1A to 1C are diagrammatic views in side elevation illustrating the basic principles of the gas generators of the present invention;
Figure 2 is a diagrammatic view illustrating a variation of the basic principles of the gas generators of the present invention;
Figure 3A is an elevational sectional view of one embodiment of a gas generator of the present invention;
Figure 3B is an enlarged cross-sectional view of the CO₂-valve (V) of Figure 3A;
Figure 3C is a cross-sectional view illustrating an alternative arrangement for outputting CO₂ gas from the gas generator;
Figure 3D is an elevational cross-sectional view of another embodiment of the present invention;
Figure 3E is an enlarged view showing detail "A" of Figure 3D;
Figure 3F is an enlarged view showing details of valve V₁ of Figure 3E;
Figure 3G shows an alternative construction to the valve V₁ of Figure 3E;
Figure 3H shows still another alternative construction for the valve assembly V₁ of Figure 3E;
Figure 3I shows an embodiment of the present invention with the valving arrangements illustrated in Figures 3G and 3H;
Figures 3J and 3K are further embodiments of the present invention;
Figure 3L is an embodiment of the invention employing only liquid reagents;
Figure 3M shows an embodiment of the present invention utilizing an external reference pressure source;
Figures 4A to 4C show a gas generator capsule of the present invention inserted in a beverage bottle; Figure 4A being a sectional view of the capsule, Figure 4B a partial sectional view of the capsule in a bottle, and Figure 4C a diagrammatic view illustrating the relative proportions of the capsule and the bottle;
Figures 5A to 5C illustrate the use of the gas generator of the present invention in a beverage bottle equipped with a manually actuable dispensing head; and
Figures 6A and 6B illustrate the use of a gas generator capsule of the present invention in an aerosol container for maintaining the required gas head-space pressure therein.

### DETAILED DESCRIPTION OF THE INVENTION

### Basic Principles

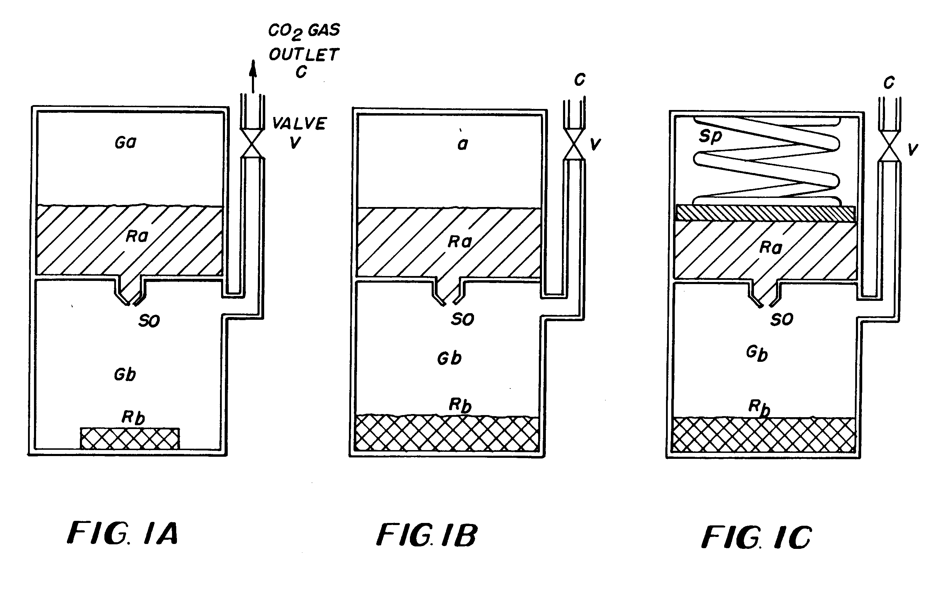

The basic principles are shown in Figure 1A to 1C. Firstly, in Figure 1A, a pre-pressurized gas chamber Gₐ presses a reagent Rₐ through a small orifice SO. As reagent Rₐ contacts reagent R_{b} in the lower chamber G_{b}, CO₂ gas is released. REagent Rₐ continues to flow through to the chamber G_{b}, until the gas pressure in chamber G_{b} is equal to that of chamber Gₐ. Flow stops due to the surface tension of liquid Rₐ. When gas is drawn off by opening valve V, more reagent Rₐ flows into chamber G_{b} so as to equalize pressures again. The pre-set pressure in chamber Gₐ acts as a reference and controls the product gas-pressure accordingly. It acts in effect as a pre-set pressure memory. As a result, the gas content of reagents Rₐ and R_{b} is released only as it is used and the total pressure of the system does not exceed that of the pre-set reference Gₐ, which in effect is the user-pressure, i.e. the lowest system-pressure possible. The system is automatic in response and once pre-packaged delivers gas at the pre-arranged pressure until the reagents are exhausted. The user only needs to open valve V. Simple materials can be used for packaging the system, since relatively low pressures are involved.

Regarding the reagents, many options are available. REagent Rₐ can be simply water, whereby R_{b} would then be a solid mixture of alkali and acid (e.g. sodium bicarbonate and citric acid). Alternatively, Rₐ could be an acid solution (e.g. phosphoric acid) and R_{b} an alkali such as sodium bicarbonate, enabling quicker system responses to pressure change. For rapid system response to pressure change, both Rₐ and R_{b} could be aqueous solutions, as indicated in Figure 1B.

The pressure memory provided by gas chamber Gₐ can be replaced by a mechanical system, such as a spring, if this is more convenient to a particular application (see Figure 1C). In such a case the gas chamber Gₐ is replaced by the spring Sₚ and a piston or membrane P, or by similar devices. All devices must have the effect of providing a constant and desired pressure at the orifice SO.

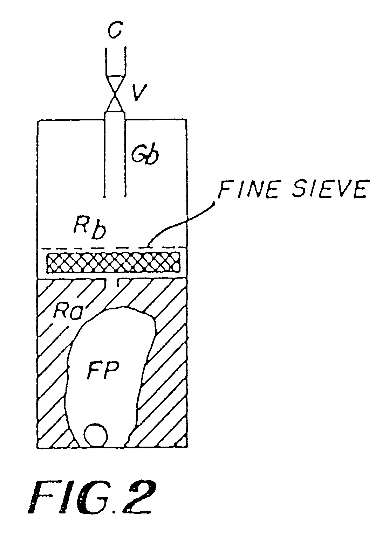

A transportable system, as shown in Fig. 2, would be to suspend the reagent R_{b} between 2 fine screens and to supply reagent Rₐ through the small orifice SO. All previously described methods of pressuring Rₐ to a predetermined level can be used or alternatively a pre-pressurized flexible pouch, dead-weighted so that it sinks to the bottom of the container. The pouch FP expands to maintain pressure G_{b}. Once G_{b} is in equilibrium with the pressure in FP, the reagent Rₐ is pushed back into its own chamber and gas generation stops. Surface tension forces prevent leakage of reagent Rₐ onto R_{b} once pressures in FP and G_{b} are equalized, even if the device is inverted or placed in a horizontal position.

The above variations are intended to indicate only a part of the range of options available, using the same basic principles. All may have application depending on the type of user -system employed.

Pre-pressuring of gas-space Gₐ or pouch FP can be achieved by using coated reagent R_{b} pellets together with reagent Rₐ. Thus the space (or pouch) can be sealed in an unpressurized state and the pre-determined pressure (dependent entirely on the quantity of reagents used) is generated some time after packing. The slowly-dissolving coating could, for example, be sugar or some other slowly-dissolving medium in water.

As a further option, the pressurized pouch can contain a liquid whose boiling point is chosen to provide a constant pressure at the operating temperature. Such an arrangement would be more compact, since a pre-pressurized pouch or chamber, using gas only, must have a volume which is relatively large compared with unacceptable pressure variations.

### Physical Construction

### Gas Generator

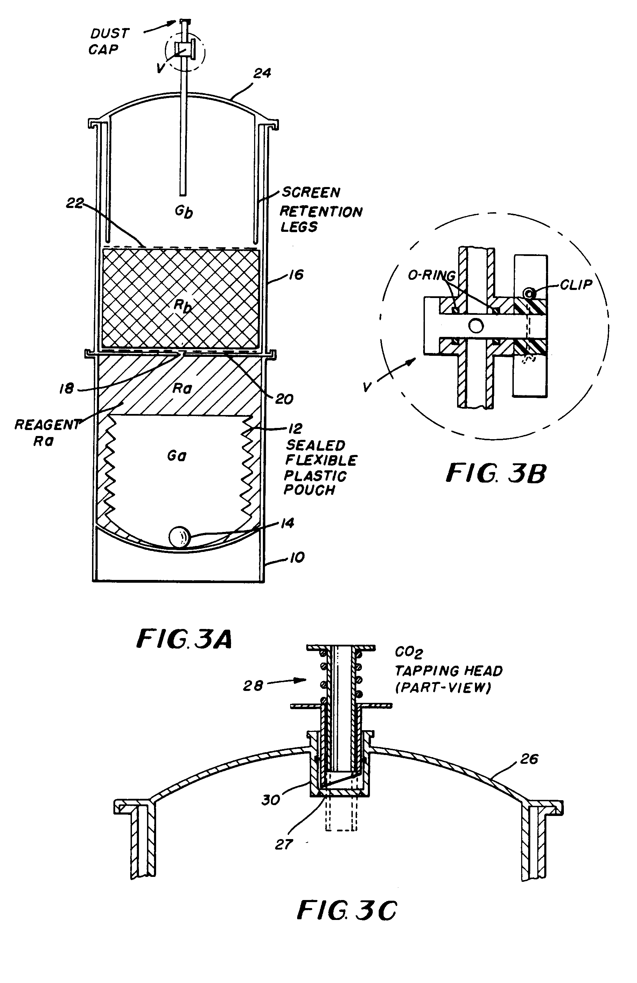

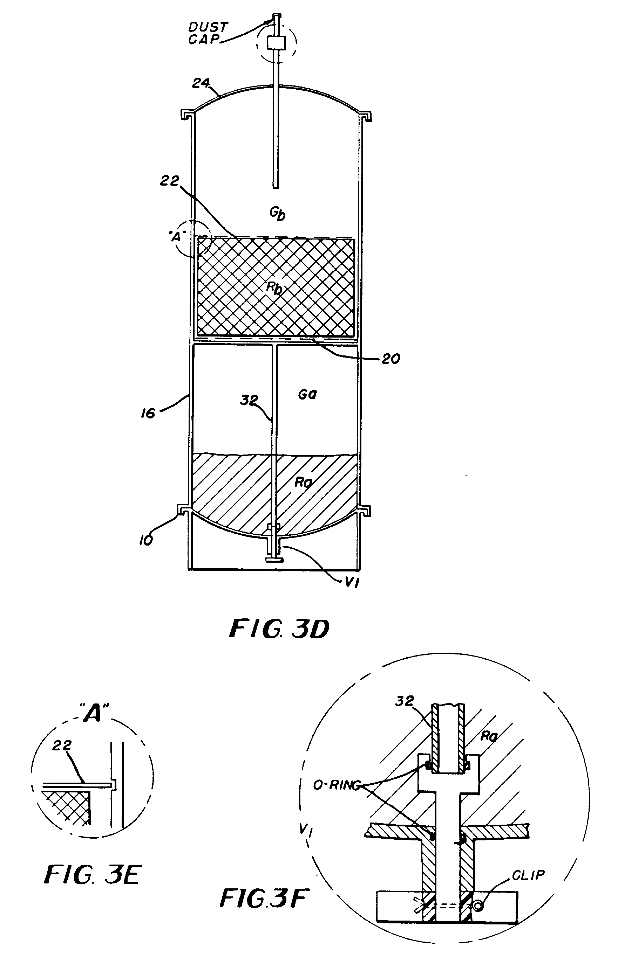

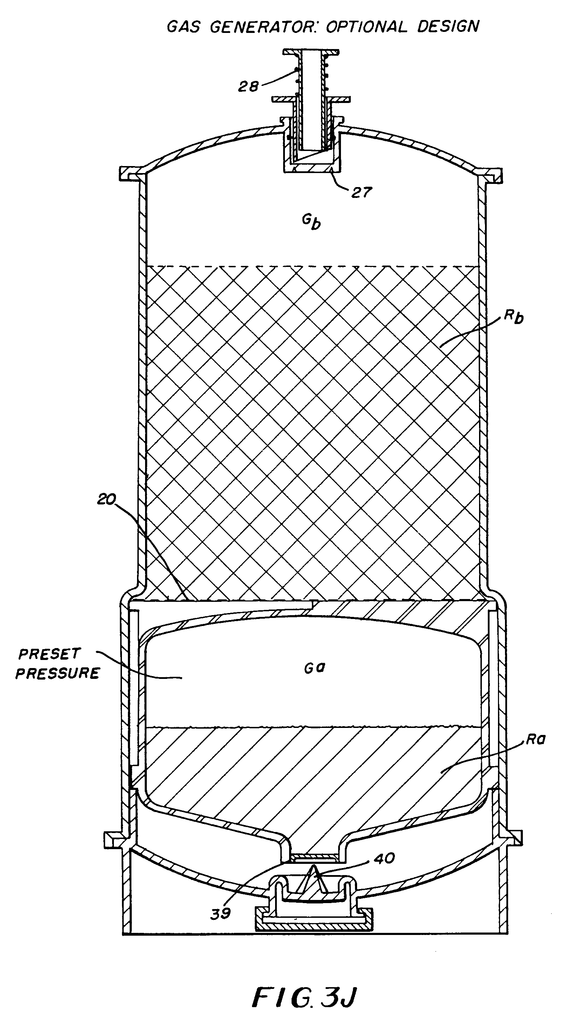

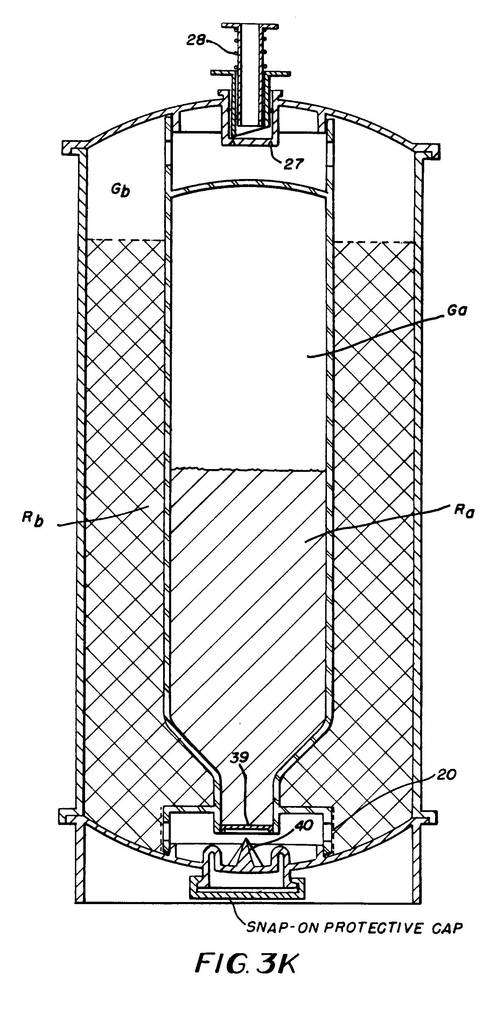

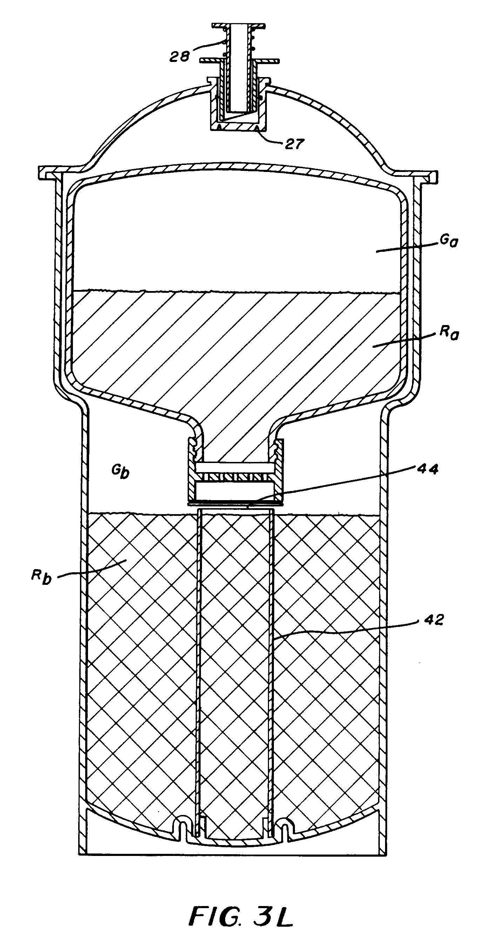

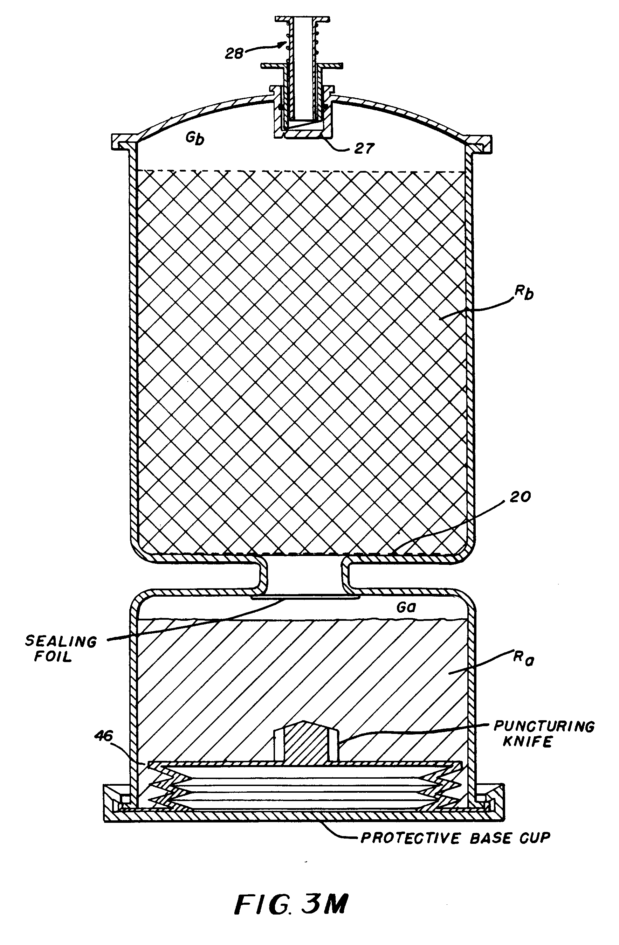

One embodiment of the gas-generator, based on the principles already described, and constructed from moulded plastic parts, is shown in Figure 3A. The base section 10 contains a flexible plastic pouch 12 with a dead-weight 14. In the manner already described, this has been filled with coated reagent R_{b} pellets and liquid reagent Rₐ in correct proportions so as to generate the desired pressure, once the coating has been dissolved some time after sealing. The reagent Rₐ is filled into this base section 10. Since the flexible pouch 12 first expands at a later state, the base section 10 is only partly filled and presents no handling problems in assembly. The middle section 16, also moulded plastic, comprises a small orifice 18 in its base. A circular filter paper 20 is laid over the orifice 18, covering the entire base and the reagent R_{b} is poured in pellet or powder form on top of the filter. A fine retention screen 22 is laid over the reagent R_{b}. The top section 24,also moulded plastic, is then applied and holds down the reagent retention screen 22. The joints of the 3 sections are welded by appropriate means. Some time after assembly, the coated pellets in the flexible pouch 12 dissolve and the pouch expands pushing reagent Rₐ through the orifice 18 and onto reagent R_{b}. As soon as the gas pressure in the gas-space G_{b} rises up to the predetermined pressure within the pouch 12, the reagent Rₐ is expelled into the lower compartment and the pouch is forced to contract appropriately. Thereafter, the pouch re-expands to bring reagent Rₐ in contact with R_{b}, whenever the gas-space pressure falls, and thus maintains the required gas supply pressure.

Gas is drawn-off through a simple valve such as illustrated in Figure 3B. Alternatively, a simple tapping device may be used as shown in 3C. Here, the dome 26 of the device is punctured at a pre-determined break-point 27 by an external tool 28 which at the same time seals against the entry duct 30. The same break-point 27 serves as the pressure safety disc of the device.

The system is transportable once the gas-space has achieved equilibrium pressure (shortly after assembly) since surface tension forces at the orifice will not permit liquid to enter the reagent R_{b} space.

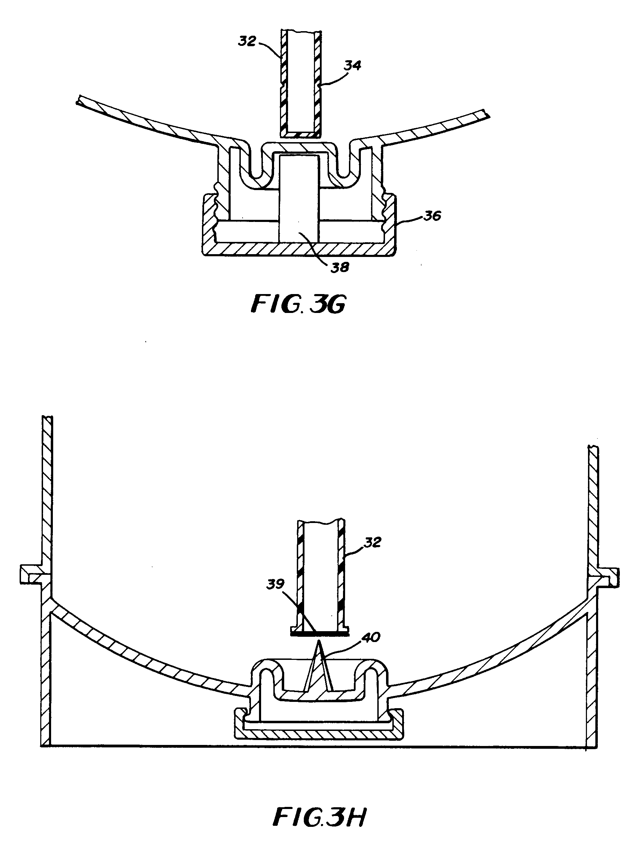

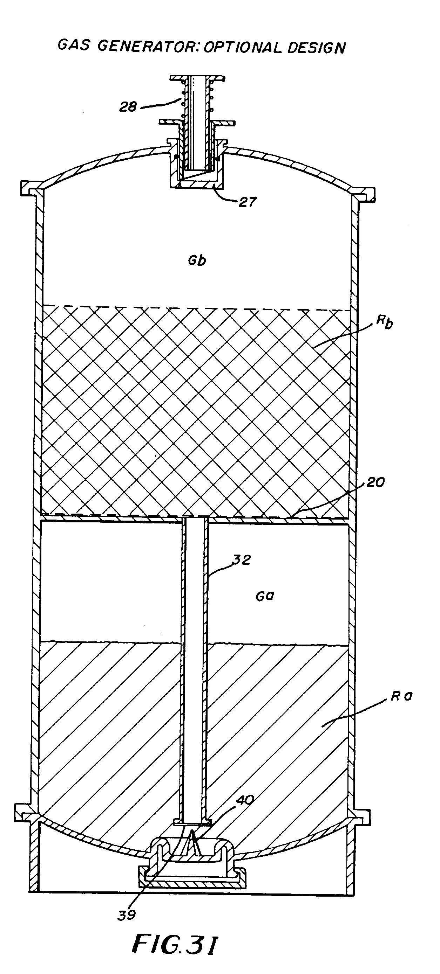

A further embodiment is illustrated by 3D. Here the pre-determined pressure is provided by gas space Gₐ and reagent Rₐ is pushed up a tube 32 to R_{b}. When pressure Gₐ and G_{b} have equalized, Rₐ returns down to the tube 32 to its own space and the reaction stops. For transportation a simple valve V₁ at base of central tube 32, can be used. Alternatively, as shown in 3G, the central tube 32 can be sealed at the base and have a pre-determined break-point 34, which is broken by pressing in the base prior to use. The appropriate pressure can be applied by rotating an external cap 36 including a pressure applying pin 38. A further variation of the same principle is shown in 3H, whereby the central tube 32 has a foil seal 39 which is punctured by pressing in the base. This is done by pressing the cylinder against an external protrusion 40. (For example, a protrusion in the CO₂-compartment base in a dispenser). Figure 3I shows an embodiment of 3D with the valving arrangements described in Figures 3G and 3H.

Figures 3J and 3K are further embodiments of the principles described, which may prove easier to manufacture in a high-speed line. Figure 3L is an embodiment of a system employing only liquid reagents for Rₐ and R_{b}. Here the flow of reagent Rₐ stops, once pressure-equilibrium between Gₐ and G_{b} has been reached, due to the action of surface tension forces in the orifices at the base of chamber Gₐ. The reagent Rₐ is released at the time of use by pressing in the base, which in turn raises the puncturing tube 42 to break the foil seal 44 at the base of chamber Gₐ.

Provided the device is to be used in a dispenser, which can be designed to provide the necessary pressure on reagent Rₐ externally, a non-pressurized generator, with all the attendant production and transportation advantages, is possible. An embodiment of this is shown in Figure 3M. Now there is no in-built pressure memory, and in its place, a simple bellows 46 or membrane or piston is used. The reference pressure is applied from an external source, within the equipment employing the generator, and this presses the bellows 46. Thereafter, the generator operates as already described.

### Beverage Refresher

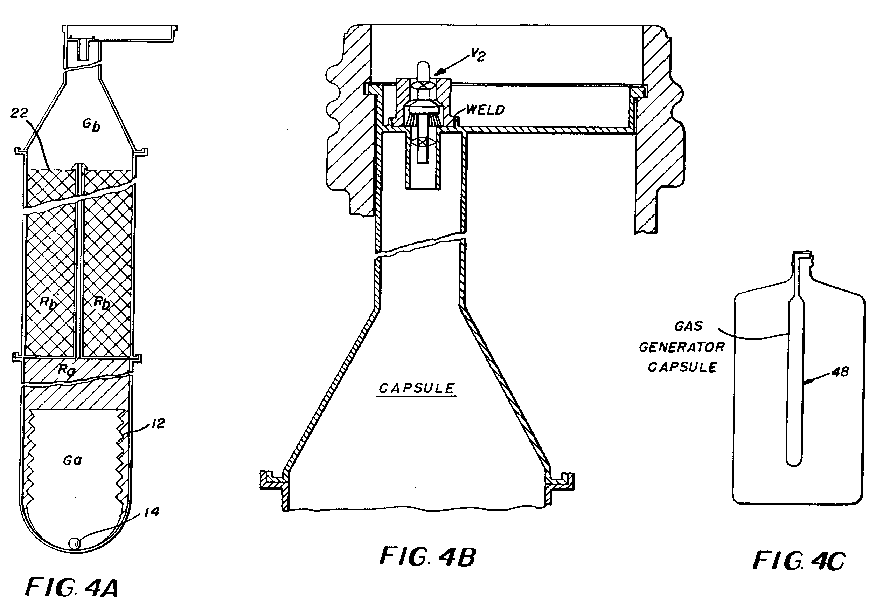

The gas generator can be constructed as a capsule which is inserted in a beverage bottle and releases gas only when the closure is applied. An embodiment of this is shown in Figures 4A and 4B. The gas generator itself employs one of the principles explained above, but many of the other principles could also be adapted to this application.

The capsule is pencil-shaped so that it can be passed through the normal finish of a bottle (see Figure 4C). The capsule of Figure 4A comprises the same 4 basic components already outlined above for the gas generator: a base-section containing reagent Rₐ, a pre-pressurized pouch, a middle-section containing reagent R_{b}, a top-section (which in this case locates in the mouth of the bottle) and finally a gas-valve, which in this case is opened by the pressure of the applied closure. The middle-section has an orifice which protrudes above the surface or the reagent R_{b}. The fine screen or sieve, retaining the reagent R_{b} is pressed over the lips of the orifice and located by protrusions on the outside of the orifice tube. Reagent Rₐ flows onto R_{b} until the gas space achieves equilibrium with the pressure of the flexible pouch. A simple moulded plastic valve V₂, which is actuated by the downward pressure of the closure is welded to the top-section. The embodiment of this valve is illustrated in Figure 4B, together with the method of location of the capsule in the mouth of the beverage bottle. The valve consists of 2 moulded plastic parts: the valve housing and the valve spindle. The valve spindle locates in the gas exit tube and is moulded with a series of fingers, which act as springs. Assisted by the gas pressure, the springs help to seat the valve, whenever the downward pressure of the closure is removed. Thus, no gas escapes while the bottle is open.

When the closure is reapplied, gas is generated and fills the bottle head-space until this is at equilibrium with the pressure in the flexible pouch.

During transportion of the bottle, the gas valve is open. It is, in fact, open at all times after the bottle is first capped. However, no reagents can pass into the beverage since the reagent immediately below the gas valve is powder, the gas exit tube is constructed so as to prevent liquids/solids escaping, and the gas pressure helps to keep the liquid in the lower space. Moreover since beverage-type components are used as reagents, a leakage of the capsule would not affect the safe consumption of the beverage.

### Finished Beverage Dispenser

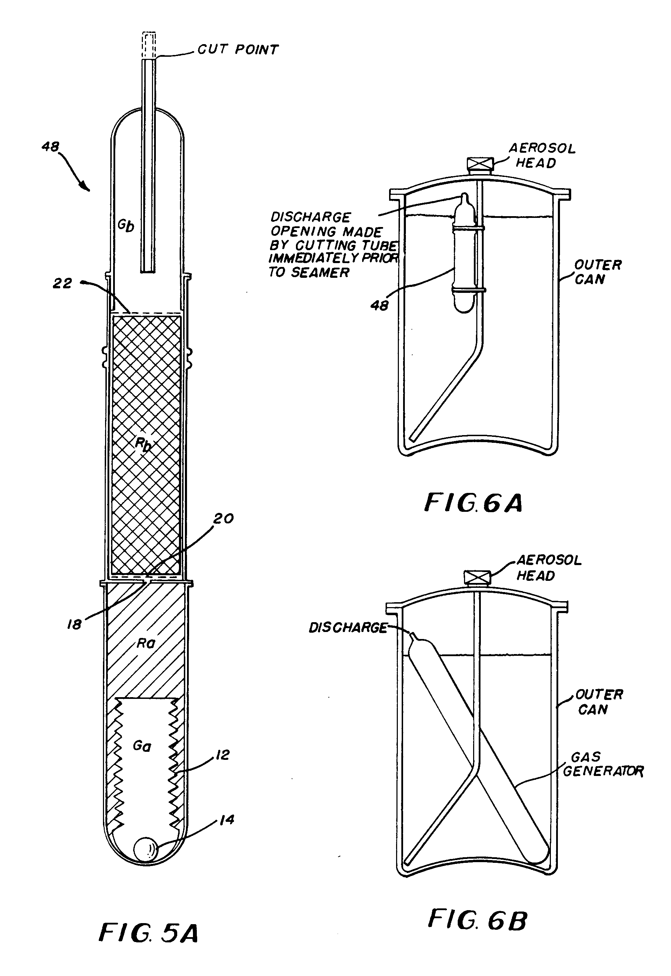

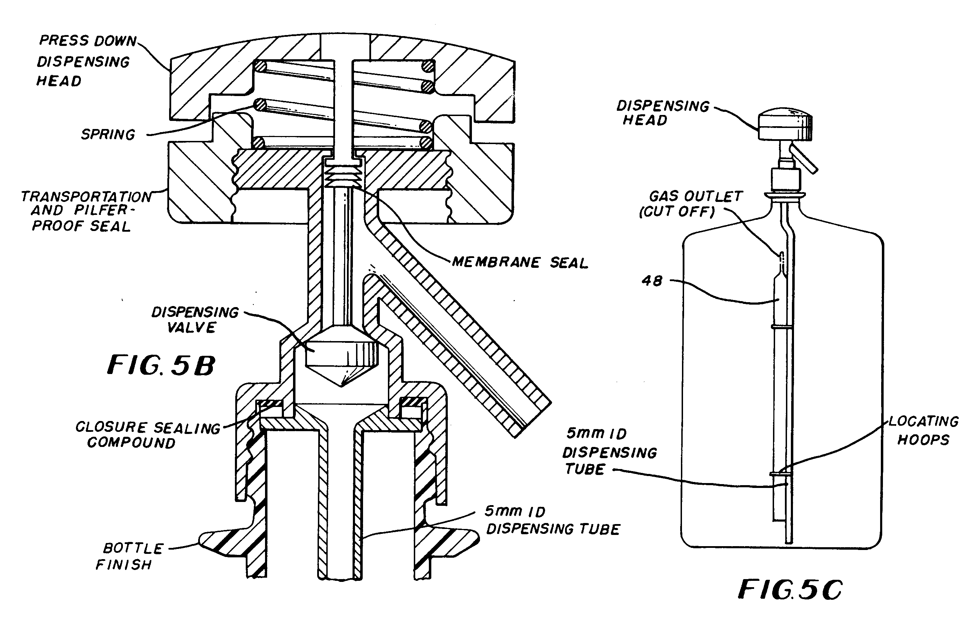

The gas-generator may be used to maintain a gas pressure in the head-space of a beverage bottle (or other liquid container) and thus enable the beverage (or other liquid) to be dispensed through a dip-tube by opening a valve at the head of the dip-tube. An embodiment of this is shown in Figure 5A, 5B and 5C.

The gas-generator capsule is shown in Figure 5A. It consists of a base section containing reagent Rₐ and including a pre-pressurized flexible plastic pouch, a middle section containing reagent R_{b} and including an orifice, filter-paper and retention screen; and a top-section which holds down the screen and includes the gas outlet. The gas-outlet is sealed when the gas generator is assembled and the tube is cut to initiate gas release immediately prior to cap application after filling. The gas is generated, in the mode already described, to maintain a head-space gas-pressure in the bottle.

The gas-generator is cradled in moulded support hoops on the dispensing dip-tube, as shown in Figure 5B.

A dispensing head embodiment is shown in Figure 5C. It consists of five parts: a capping section, which screws onto the threads of the bottle-finish and connects to the dip-tube, a valve-spindle, a transportation sealing lock-ring, a spring and a press-down-head. The capping-section includes a spout. The valve spindle seats against a shoulder on the base of the capping section and opens the flow when depressed downwards. A series of membranes, moulded onto the valve spindle, seal against the bore of the top of the capping section to prevent liquid leakage. The spring presses the valve spindle upwards so as to close the valve. In this it is assisted by the head-space pressure within the bottle. When the spring is compressed by a downward pressure on the dispenser head, the valve opens and liquid flows, propelled by the gas-pressure in the head-space. For safe transportation, the sealing lock-ring presses the dispensing head upwards ensuring that the dispensing valve remains closed. The user breaks the seal of this ring by screwing it downwards to a stop. This frees the dispensing head and enables it to be used. All 5 dispenser-head parts described are constructed of moulded plastic.

### Aerosol Application

The capsule described above for the finished beverage dispenser can be also used to maintain a required gas head-space pressure in an aerosol. Two examples of such an assembly are shown in Figures 6A and 6B. This employs the principles already described. The release of gas can be initiated by cutting the gas outlet tube shortly before the aerosol is sealed or by employing a simple valve, as shown in principle in Figure 4B, which opens on application of the container lid.

## Claims

1. An apparatus for chemically generating gas and supplying the gas to a utilization device at a predetermined pressure comprising:
a container having at least one partition for defining first and second reagent chambers (Ga, Gb) on opposite sides thereof, said partition having an orifice (S0) therein;
a liquid reagent (Ra) in the one chamber (Ga) and a second reagent (Rb) in the other chamber (Gb), said liquid reagent (Ra) and second reagent (Rb) chemically reacting to generate said gas upon contact with each other;
a gas generation chamber within said container for accommodating the generated gas under pressure and
valve means (V) in fluid communication with said gas generation chamber for withdrawing gas therefrom when OPEN and preventing the flow of gas therefrom when CLOSED;
characterized by
reference pressure means for applying said predetermined pressure to said liquid reagent (Ra) to propel said liquid reagent toward said second reagent in opposition to a force caused by the pressure of the generated gas against the liquid reagent; and
said orifice (S0) in the partition being of a size selected as a function of surface tension properties of the liquid reagent (Ra) for permitting said liquid reagent to pass therethrough and contact the second reagent to generate said gas into said gas generation chamber when the pressure in the gas generation chamber is less than the predetermined pressure applied to said liquid reagent by said reference pressure means, and precluding the liquid reagent from contacting the second reagent when the pressure in said gas generation chamber is equal to or greater than said predetermined pressure;
whereby the pressure of gas withdrawn through said valve means when OPEN is substantially maintained at said predetermined pressure.

2. The apparatus of claim 1 wherein said reference pressure means comprises a flexible pouch (FP, 12) filled with a second gas at said predetermined pressure, said pouch contacting the first side of said first reagent.

3. The apparatus of claim 2 wherein the second gas is generated by a chemical reaction of additional reagents within said flexible pouch (FP).

4. The apparatus of claim 1 wherein said reference pressure means is a compression spring (Sp) which exerts a force against said first side of the first reagent (Ra).

5. The apparatus of claim 1 wherein said reference pressure means is a bellows (46) filled with a supply of gas at said predetermined pressure, said bellows exerting a force on the first side of said first reagent (Ra).

6. The apparatus of claim 3, wherein said additional reagents include coated pellets in a liquid reagent for generating a desired pressure once the coating has dissolved.

7. The apparatus of claim 3, further including filter means (20) placed over said orifice.

8. The apparatus of claim 1, wherein said second reagent is also liquid.

9. The apparatus of claim 1, wherein said reference pressure means is a weighted flexible pouch filled with coated pellets of the same composition as said second reagent and an additional liquid reagent, the reagents in said pouch reacting to generate a gas of predetermined pressure.

10. The apparatus of claim 1, wherein said valve means includes a wall portion in said gas chamber puncturable by a plunger, said wall portion also being puncturable by pressures above a safe pressure limit in said gas generation chamber.

## Patentansprüche

1. Vorrichtung zur chemischen Erzeugung von Gas und zur Zuführung des Gases zu einem Verwendungsgerät mit einem vorgebenen Druck mit:
einem Behälter, der wenigstens eine Trennwand zur Begrenzung einer ersten und einer zweiten Reagenzkammer (Ga, Gb) auf entgegengesetzten Seiten davon aufweist, wobei die Trennwand eine Öffnung (S0) aufweist,
einem flüssigen Reagenz (Ra) in der einen Kammer (Ga) und einem zweiten Reagenz (Rb) in der anderen Kammer (Gb), wobei das flüssige Reagenz (Ra) und das zweite Reagenz (Rb) chemisch reagieren, um bei gegenseitiger Berührung das Gas zu erzeugen,
einer Gaserzeugungskammer innerhalb des Behälters zur Aufnahme des erzeugten Gases unter Druck und
einer Ventileinrichtung (V) in Fluidverbindung mit der Gaserzeugungskammer zum Abziehen von Gas im offenen Zustand und zum Verhindern einer Gasströmung im geschlossenen Zustand,
gekennzeichnet
durch eine Referenzdruckeinrichtung zum Anlegen des vorgegebenen Druckes an das flüssige Reagenz (Ra), um das flüssige Reagenz gegen eine Kraft, die durch den Druck des erzeugten Gases gegen das flüssige Reagenz verursacht wird, zu dem zweiten Reagenz zu treiben, und
dadurch, daß die Öffnung (S0) in der Trennwand von einer Größe ist, die als eine Funktion der Oberflächenspannungseigenschaften des flüssigen Reagenz (Ra) ausgewählt ist, um es dem flüssigen Reagenz zu ermöglichen, durch die Öffnung hindurchzutreten und das zweite Reagenz zu berühren, um das Gas in der Gaserzeugungskammer zu erzeugen, wenn der Druck in der Gaserzeugungskammer kleiner als der vorgegebene Druck ist, der durch die Referenzdruckeinrichtung an das flüssige Reagenz angelegt wird, und um das flüssige Reagenz an einer Berührung des zweiten Reagenz zu hindern, wenn der Druck in der Gaserzeugungskammer gleich oder größer als der vorgegebene Druck ist,
wodurch der Druck des durch die Ventileinrichtung, wenn sich diese im offenen Zustand befindet, abgezogenen Gases im wesentlichen auf dem vorgegebenen Druck gehalten wird.

2. Vorrichtung nach Anspruch 1, wobei die Referenzdruckeinrichtung einen flexiblen Beutel (FP, 12) aufweist, der mit einem zweiten Gas mit dem vorgegebenen Druck gefüllt ist und die erste Seite des ersten Reagenz berührt.

3. Vorrichtung nach Anspruch 2, wobei das zweite Gas durch eine chemische Reaktion zusätzlicher Reagenzien innerhalb des flexiblen Beutels (FP) erzeugt wird.

4. Vorrichtung nach Anspruch 1, wobei die Referenzdruckeinrichtung eine Druckfeder (Sp) ist, die eine Kraft gegen die erste Seite des ersten Reagenz (Ra) ausübt.

5. Vorrichtung nach Anspruch 1, wobei die Referenzdruckeinrichtung ein Faltenbalg (46) ist, der mit einem Vorrat von Gas mit dem vorgegebenen Druck gefüllt ist und eine Kraft auf die erste Seite des ersten Reagenz (Ra) ausübt.

6. Vorrichtung nach Anspruch 3, wobei die zusätzlichen Reagenzien beschichtete Pellets in einem flüssigen Reagenz zur Erzeugung eines gewünschten Druckes, wenn die Beschichtung aufgelöst worden ist, umfassen.

7. Vorrichtung nach Anspruch 3, mit zusätzlich einer Filtereinrichtung (20), die über der Öffnung angeordnet ist.

8. Vorrichtung nach Anspruch 1, wobei das zweite Reagenz ebenfalls flüssig ist.

9. Vorrichtung nach Anspruch 1, wobei die Referenzdruckeinrichtung ein beschwerter flexibler Beutel ist, der mit beschichteten Pellets derselben Zusammensetzung wie das zweite Reagenz und einem zusätzlichen flüssigen Reagenz gefüllt ist, wobei die Reagenzien in dem Beutel reagieren, um ein Gas von vorgegebenem Druck zu erzeugen.

10. Vorrichtung nach Anspruch 1, wobei die Ventileinrichtung einen Wandabschnitt in der Gaskammer umfaßt, der durch einen Kolben durchstoßbar ist, wobei der Wandabschnitt auch durch Druckwerte oberhalb einer Sicherheitsdruckgrenze in der Gaserzeugungskammer durchstoßbar ist.

## Revendications

1. Dispositif pour produire par voie chimique un gaz et l'envoyer à un dispositif d'utilisation, sous une pression prédéterminée, comprenant :
un récipient comportant au moins une cloison de séparation servant à définir des première et seconde chambres à réactifs (Ga,Gb) sur des côtés opposés de la cloison de séparation, ladite cloison de séparation comportant un orifice (S0);
un réactif liquide (Ra) placé dans une chambre (Ga) et un second réactif (Rb) possédant une chambre (Gb), ledit réactif liquide (Ra) et le second réactif (Rb) réagissant chimiquement pour produire ledit gaz lorsqu'ils viennent en contact réciproque;
une chambre de production du gaz située dans ledit récipient pour recevoir le gaz produit comprimé; et
des moyens formant soupape (V) placés en communication fluidique avec ladite chambre de production du gaz pour soutirer du gaz de cette chambre lorsque la soupape est dans la position OUVERTE et empêcher une sortie du gaz à partir de cette chambre lorsque la soupape est dans la position FERMEE;
caractérisé par
des moyens d'application d'une pression de référence servant à appliquer ladite pression prédéterminée audit réactif liquide (Ra) pour propulser ledit réactif liquide en direction dudit second réactif en sens opposé d'une force produite par la pression du gaz à l'encontre du réactif liquide; et
ledit orifice (SO) ménagé dans la cloison de séparation possédant une taille choisie en fonction de propriétés de tension superficielle du réactif liquide (Ra) pour permettre audit réactif liquide de traverser ledit orifice et de venir en contact avec le second réactif pour produire ledit gaz dans ladite chambre de production du gaz lorsque la pression dans cette chambre de production du gaz est inférieure à la pression prédéterminée appliquée audit réactif liquide par lesdits moyens appliquant une pression de référence, et empêcher le réactif liquide de venir en contact avec le second réactif lorsque la pression dans ladite chambre de production du gaz est égale ou supérieure à ladite pression prédéterminée;
la pression du gaz prélevé par lesdits moyens formant soupape dans la position OUVERTE étant maintenus sensiblement égale à ladite pression prédéterminée.

2. Dispositif selon la revendication 1, dans lequel lesdits moyens délivrant une pression de référence comprennent un sac flexible (PF,12) rempli par un second gaz situé à ladite pression prédéterminée, ledit sac étant en contact avec le premier côté dudit premier réactif.

3. Dispositif selon la revendication 2, dans lequel le second gaz est produit par une réaction chimique de réactifs additionnels situés dans ledit sac flexible (FP).

4. Dispositif selon la revendication 1, selon lequel lesdits moyens produisant la pression de référence sont constitués par un ressort de compression (Sp), qui applique une force contre ledit premier côté du premier réactif (Ra).

5. Dispositif selon la revendication 1, dans lequel lesdits moyens produisant la pression de référence sont constitués par un soufflet (46) rempli par un volume de gaz situé à ladite pression prédéterminée, ledit soufflet appliquant une force audit premier côté dudit premier réactif (Ra).

6. Dispositif selon la revendication 3, dans lequel lesdits réactifs additionnels comprennent une pastille enrobée placée dans un réactif liquide pour produire une pression désirée une fois que l'enrobage est dissous.

7. Dispositif selon la revendication 3, comprenant en outre des moyens formant filtre (20) placés au-dessus dudit orifice.

8. Dispositif selon la revendication 1, dans lequel ledit second réactif est également liquide.

9. Dispositif selon la revendication 1, dans lequel lesdits moyens produisant la pression de référence sont un sac flexible chargé rempli par des pastilles enrobées formées par la même composition que ledit second réactif, et le réactif liquide additionnel, le réactif situé dans ledit sac réagissant pour produire un gaz à une pression prédéterminée.

10. Dispositif selon la revendication 1, dans lequel lesdits moyens formant soupape comprennent un élément de paroi situé dans ladite chambre à gaz et pouvant être perforé par un poinçon, ledit élément de paroi pouvant être également perforé par des pressions supérieures à une pression limite de sécurité dans ladite chambre de production du gaz.
